(19) **Europäisches Patentamt / European Patent Office / Office européen des brevets**

(11) **EP 4 481 067 A1**

(12) **EUROPEAN PATENT APPLICATION**
published in accordance with Art. 153(4) EPC

(43) Date of publication:
**25.12.2024 Bulletin 2024/52**

(21) Application number: **23779271.8**

(22) Date of filing: **06.03.2023**

(51) International Patent Classification (IPC):
**C22B 1/20** (2006.01)

(52) Cooperative Patent Classification (CPC):
**C22B 1/20**

(86) International application number:
**PCT/JP2023/008343**

(87) International publication number:
**WO 2023/189242 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.03.2022 JP 2022051407**

(71) Applicant: **JFE Steel Corporation**
**Tokyo 100-0011 (JP)**

(72) Inventors:
• **HORITA, Kenya**
**Tokyo 100-0011 (JP)**
• **IWAMI, Yuji**
**Tokyo 100-0011 (JP)**
• **HIGUCHI, Takahide**
**Tokyo 100-0011 (JP)**
• **KAWANO, Takashi**
**Tokyo 100-0011 (JP)**
• **IKEDA, Kohei**
**Tokyo 100-0011 (JP)**

(74) Representative: **Grünecker Patent- und Rechtsanwälte**
**PartG mbB**
**Leopoldstraße 4**
**80802 München (DE)**

(54) **SINTERED ORE STRUCTURE PREDICTION METHOD AND SINTERED ORE PRODUCTION METHOD USING SAME**

(57) Provided are a sintered ore structure prediction method capable of identifying and managing sintered ore structures such as the mineral structure and pore structure of a sintered ore online; and a sintered ore production method using such sintered ore structure prediction method. The sintered ore structure prediction method is a method for predicting structures of a sintered ore that is produced by forming a charged layer after charging a raw material for sintering into a continuous-type pallet carriage of a Dwight-Lloyd type sintering machine, and then by sintering the charged layer, where the structures of the sintered ore are predicted using a sintering temperature history in the charged layer that is calculated from production conditions of the sintered ore and a heat transfer model. Further, there are identified sintered ore production conditions under which sintered ore structures predicted by the sintered ore structure prediction method match previously determined sintered ore structures, and the sintered ore is then produced under the production conditions identified.

Fig. 2

**Description**

Technical Field

The present invention relates to a prediction method for predicting the sintered ore structures of a sintered ore used as a blast furnace raw material; and a sintered ore production method using such prediction method.

Background Art

Qualities of a sintered ore such as the strength and reducibility thereof depend on the mineral structure and pore structure therein. The mineral structure and pore structure of a sintered ore are affected by a sintering temperature history that is determined by raw material conditions and operating conditions. While it is critical to control the mineral structure and pore structure of a sintered ore in terms of ensuring the quality of the sintered ore, it is required that mineral and pore structure measurement be conducted in such a manner where a sintered ore produced is at first collected in an offline setting, followed by evaluating the same via, for example, cross-section observation and/or XRD, which has made online management impossible.

As a method for measuring the sintering temperature history of a charged layer of a raw material for sintering when producing a sintered ore, Patent Literature 1, for example, discloses a method for managing operating conditions by calculating a feature quantity from temperature data in a height direction that is actually measured by a thermocouple. However, it has been practically difficult to install a thermocouple in an actual continuous-type pallet carriage to measure data either continuously or daily in a batch-wise manner. In addition, this method is about feedback actions, which has led to opportunity losses for operational improvements; the method has a problem of not being able to provide feedforward actions.

Here, as a method for estimating a sintering temperature history, Non Patent Literature 1 already discloses a heat transfer model expressed in formulae. Further, for example, Patent Literature 2 discloses a method capable of calculating a temperature history with a relatively high degree of precision even when employing carbon materials with different combustibilities, using the heat transfer model disclosed in Non Patent Literature 1.

Citation List

Patent Literature

Patent Literature 1: JP-A-2013-44491
Patent literature 2: JP-A-2015-137368

Non Patent literature

Non Patent Literature 1: Iwao MUCHI and one other, Theoretical Analysis on the Operation of Sintering, Tetsu-to-Hagane, Volume 56 (1970), Issue 3, Pages 371-381
Non Patent Literature 2: Ko-ichiro Ohno and four others, Effect of Coke Combustion Rate Equation on Numerical Simulation of Temperature Distribution in Iron Ore Sintering Process, Tetsu-to-Hagane, Volume 101 (2015), Issue 1, Pages 19-24

Summary of Invention

Technical Problem

As such, although there are known heat transfer models for estimating sintering temperature histories, there has not yet been disclosed a technique to predict the sintered ore structures of a sintered ore such as the mineral structure and pore structure thereof. As described above, in order to identify the mineral structure and pore structure, it is required that a sintered ore produced be at first collected in an offline setting before evaluating the same via, for example, cross-section observation and/or XRD. For this reason, there has been a problem that it is not possible to manage the mineral structure and pore structure that affect the quality of a sintered ore online. In addition, since the conventional technique is to analyze a sintered ore that has already been produced, the technique provides nothing more than feedback actions, and the problem of causing opportunity losses for operational improvements still remains unsolved; desired is a technique enabling feedforward actions.

The present invention was made in view of the above issues, and it is an object of the present invention to provide a sintered ore structure prediction method capable of identifying and managing sintered ore structures such as the mineral structure and pore structure of a sintered ore online; and a sintered ore production method using such sintered ore structure prediction method.

Solution to Problem

The present invention is a sintered ore structure prediction method for predicting structures of a sintered ore that is produced by forming a charged layer after charging a raw material for sintering into a continuous-type pallet carriage of a Dwight-Lloyd type sintering machine, and then by sintering the charged layer. This prediction method includes: predicting the structures of the sintered ore, using a sintering temperature history in the charged layer that is calculated from production conditions of the sintered ore and a heat transfer model.

Here, in the sintered ore structure prediction method of the present invention that is configured as above, it is considered that more preferred solutions can be brought about when

(1) the production conditions of the sintered ore include component concentrations, particle sizes, and blending amounts of raw materials that are blended into the raw material for sintering, a speed of the pallet carriage, a layer thickness of the charged layer, and a negative pressure;
(2) the production conditions of the sintered ore further include one or more of a gas fuel blowing amount, an oxygen blowing amount, and a circulating exhaust gas amount;
(3) the structures of the sintered ore are predicted using previously obtained correspondence relations between the sintering temperature history and the structures of the sintered ore;
(4) the structures of the sintered ore are a calcium ferrite content in the sintered ore and/or a porosity of the sintered ore.

Further, the present invention provides a sintered ore production method using the above sintered ore structure prediction method. This production method includes:

identifying sintered ore production conditions under which sintered ore structures predicted by the sintered ore structure prediction method match previously determined sintered ore structures; and
producing a sintered ore under the production conditions identified.

Advantageous Effects of Invention

The sintered ore structure prediction method of the present invention allows sintered ore structures to be predicted in a short period of time, thereby making it possible to identify and manage sintered ore structures such as the mineral structure and pore structure of a sintered ore online. Further, sintered ore production conditions can be determined so that predicted sintered ore structures will match target sintered ore structures, thereby making it possible to control the structures of a sintered ore and realize the production of a high-quality sintered ore.

Brief Description of Drawings

Fig. 1 is a schematic diagram showing an example of a sintered ore production equipment capable of carrying out the sintered structure prediction method of this embodiment.
Fig.2 is a graph showing an example of a sintering temperature history that is obtained from a correlation between the sintering temperature of a charged layer and the sintering time thereof.
Fig.3 is a graph showing an example of a method for calculating a temperature history index from the sintering temperature history.
Fig.4 is a graph showing an example of a correlation between a calcium ferrite content and the temperature history index.
Fig.5 is a graph showing an example of a correlation between a predicted value of the calcium ferrite content and an actually measured value thereof.
Fig.6 is a graph showing an example of how the calcium ferrite content in a sintered ore produced changes with time.
Fig.7 is a graph showing another example of a method for calculating a temperature history index from the sintering temperature history.

Fig.8 is a graph showing an example of a correspondence relation between porosity and the temperature history index.

Description of Embodiments

An embodiment of the present invention is described in detail hereunder. Here, the following embodiment is a set of examples of a device and/or method embodying the technical concept of the present invention and is not to limit the configuration of the present invention to those shown below. That is, various modifications can be made to the technical concept of the present invention within the technical scope described in the claims.

<Sintered ore production equipment as implementation subject of the present invention>

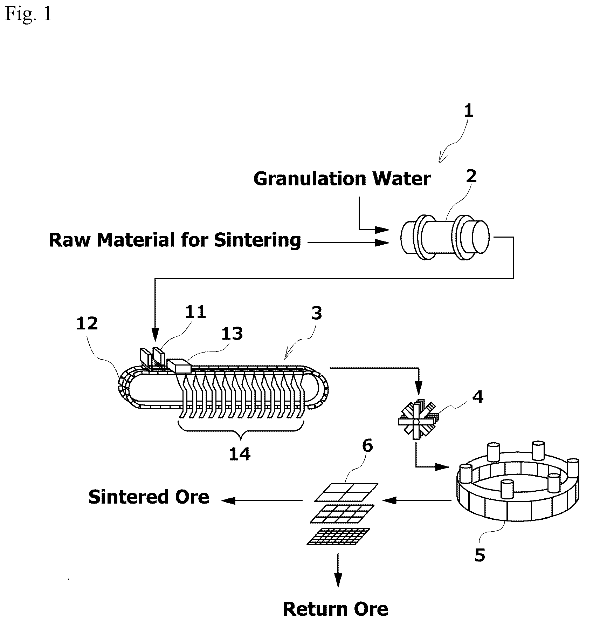

Fig. 1 is a schematic diagram showing an example of a sintered ore production equipment 1 with which a sintered structure prediction method of this embodiment can be implemented. The sintered ore production equipment 1 has a drum mixer 2 as a granulator, a sintering machine 3, a crushing machine 4, a cooler 5, and a sieving device 6. A raw material for sintering containing an iron-containing raw material, an auxiliary raw material, and a coagulating material such as a carbon material and a coke breeze is subjected to granulation in the drum mixer 2 with a granulation water being added thereto. The granulated raw material for sintering is then transferred to the sintering machine 3.

The sintering machine 3 is, for example, a Dwight-Lloyd type sintering machine. The sintering machine 3 has a raw material for sintering feeding device 11, a continuous-type pallet carriage 12, an ignition furnace 13, and a wind box 14. The granulated raw material for sintering is charged into the pallet carriage 12 from the raw material for sintering feeding device 11 to form a charged layer of the raw material for sintering. The coagulating material contained in the surface layer of the charged layer is ignited by the ignition furnace 13, and the air in the charged layer is sucked downward through the wind box 14, thereby causing the combustion molten zone in the charged layer to be moved to the lower region of the charged layer. Due to such movement of the combustion molten zone, the charged layer is sintered to form a sintered cake.

When sucking the air in the charged layer downward through the wind box 14, a gas fuel and/or an oxygen-enriched air enriched with oxygen may be supplied from the upper region of the charged layer. The gas fuel is any combustible gas selected from a blast furnace gas, a coke oven gas, a converter gas, a city gas, a natural gas, a methane gas, an ethane gas, a propane gas, and a mixed gas of these gases.

The sintered cake is crushed by the crushing machine 4 and is cooled by the cooler 5. The sieving device 6 is then used to sieve the crushed product of the sintered cake into a sintered ore having a particle size of 5 mm or larger and a return ore having a particle size of smaller than 5 mm. The return ore is again used as the raw material for sintering. The sintered ore is produced in such manner.

<Sintered ore structure prediction method of the present invention>

A sintered ore structure prediction method of this embodiment is to predict the sintered ore structures of the sintered ore produced by the sintered ore production equipment 1. Sintered ore structure prediction is carried out by at first (1) calculating a sintering temperature history using the production conditions of the sintered ore and a heat transfer model, and then (2) predicting the sintered ore structures using the sintering temperature history calculated. In a preferred embodiment, the sintered ore structures of a sintered ore are predicted using previously obtained correspondence relations between the sintering temperature history and sintered ore structures.

(1) Calculation of sintering temperature history

The sintering temperature history is calculated using a known method described in Non Patent Literature 2. Specifically, the sintering temperature history is calculated using a heat transfer model and the production conditions of the sintered ore that include the component concentrations, particle sizes and blending amounts of the iron-containing raw material, auxiliary raw material, and coagulating material that are blended into the raw material for sintering, the speed of the pallet carriage, the layer thickness of the charged layer, and a negative pressure. In this embodiment, the heat transfer model is, for example, a heat balance formula of solid phase (following formula (1)) and a heat balance formula of gas phase (following formula (2)) that are derived from the energy conservation formula.

[Formula 1]

$$\rho_s C_{p,s} \frac{\partial T_s}{\partial t} - \frac{6(1-\varepsilon_a)}{d} h\left(T_g - T_s\right) + Q(reaction) = k_s \frac{\partial^2 T_s}{\partial Z^2} \quad \cdot \cdot \cdot (1)$$

[Formula 2]

$$\rho_g C_{p,g} \frac{\partial T_g}{\partial t} - \frac{6(1-\varepsilon_a)}{d} h\left(T_s - T_g\right) + C_{p,g} \frac{\partial \rho_g u T}{\partial Z} = k_g \frac{\partial^2 T_g}{\partial Z^2} \quad \cdot \cdot \cdot (2)$$

In the above formulae (1) and (2), $\rho_s$ represents the density of a solid [kg/m³], $C_{p \cdot s}$ represents the specific heat of the solid [J/(kg×K)], $T_s$ represents the temperature of the solid [K], t represents time [sec], d represents average particle size [m], $\varepsilon_a$ represents porosity [-], h represents convective heat transfer coefficient [J/(m²×s×K)], $T_g$ represents gas temperature [K], and $k_s$ represents solid thermal conductivity [J/(m²×s×K)], and Z represents coordinate [m], Further, Q represents a reaction heat [J/s] of each substance contained in the raw material for sintering, and this reaction heat is calculated by multiplying the reaction heat and reaction speed of the substances. In the formula (2), $\rho_g$ represents the density of a gas [kg/m³], $C_{p \cdot g}$ represents the specific heat of the gas [J/(kg×K)], u represents gas flow velocity [m/s], T represents temperature [K], and $k_g$ represents gas thermal conductivity [J/(m²×s×K)].

Provisional values are used as the density $\rho_s$ of a solid and the density $\rho_g$ of a gas. As a provisional value of the density $\rho_s$ of a solid, the following value is used; and as a provisional value of the density $\rho_g$ of a gas, the following value is used. Further, as the specific heat $C_{p \cdot s}$ of a solid and the specific heat $C_{p \cdot g}$ of a gas, there are used the following values respectively.

Property of solid (hematite is used)

[Formula 3]

Density:
$$\rho_s = 5.260 \times 10^3 \quad [\text{kg/m}^3]$$

Specific heat:
$$C_{p \cdot s} = 800.0 \quad [\text{J/K}]$$

Thermal conductivity:
$$298 < T_s < 912$$

$$k_s = \frac{1}{1.887 \cdot 10^{-4} T_s} \quad [\text{J/m} \cdot \text{s} \cdot \text{K}]$$

$$912 < T_s < 1500$$

$$k_s = \frac{1}{8.319 \cdot 10^{-5} T_s + 9.243 \cdot 10^{-2}} \quad [\text{J/m} \cdot \text{s} \cdot \text{K}]$$

Property of gas (air is used)

[Formula 4]

Thermal Conductivity:

$$k_g = \left(28.836\sqrt{T} - 244.89\right) \times 10^{-4} \quad [\text{J/m·s·K}]$$

Density:

$$\rho_g = \frac{1.293}{\{1.0 + 0.00367(T - 273.15)\}} \quad [\text{kg/m}^3]$$

Specific heat:

$$C_{p \cdot g} = -2 \times 10^{-6} T^3 + 4 \times 10^{-3} T^2 - 8 \times 10^{-1} T + 998.3 \quad [\text{J/K}]$$

Each property is described hereunder.

The temperature $T_s$ of a solid is a current calculated temperature of the solid, and the temperature $T_g$ of a gas is a current calculated temperature of the gas. The time t is a set value determined by the length of a time interval over which temperature change is calculated using this model. As the average particle size d, there is used an actually measured value of the average particle size of the granulated raw material for sintering. As the porosity $\varepsilon_a$, a provisional value is used. As the provisional value of the porosity $\varepsilon_a$, "0.5" is used. The convective heat transfer coefficient h can be calculated by at first calculating an airflow rate from the negative pressure, porosity, and average particle size, and then performing further calculation using such airflow rate and the Ranz-Marshall formula. As the solid thermal conductivity $k_s$, the above-described value is used. The reaction heat Q can be calculated from the concentrations, particle sizes and blending amounts of the components blended in the raw material for sintering, the reaction heat of the components, and the reaction speed of the components. The gas flow velocity u can be calculated using the negative pressure, porosity, and average particle size. As the negative pressure, there is used an actually measured value measured by a pressure meter provided at the wind box. As the gas thermal conductivity $k_g$, the above-described value is used.

The speed of the pallet carriage is a condition that is previously set as a production condition of the sintered ore, and is used to determine an ignition time (time of exposure to high temperature) and a time from the start to the end of the calculation. The layer thickness is also a condition that is previously set as a production condition of the sintered ore, and is used to determine the time from the start to the end of the calculation.

Further, if using a sintering machine equipped with a gas fuel blowing device and an oxygen gas blowing device, the reaction heat Q in the formula (1) may be adjusted using one or more operating conditions selected from the blowing amount of the gas fuel, the blowing amount of the oxygen gas, and the amount of a circulating exhaust gas, as operating conditions.

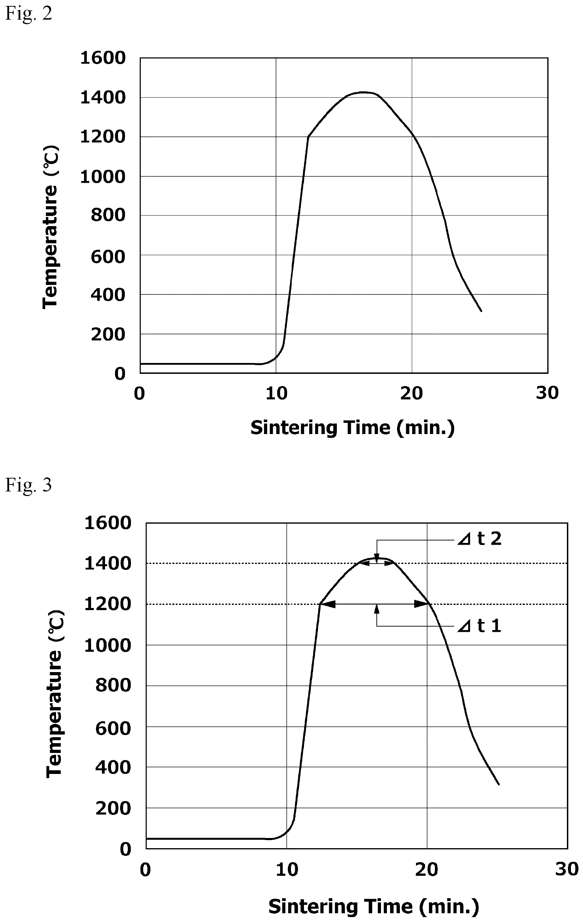

By plugging the above values into the formulae (1) and (2), and plugging the current temperatures into $T_s$ and $T_g$, the temperature change after a set time count ($\Delta t$: e.g., 1 second) can be calculated. As the initial temperatures of $T_s$ and $T_g$, there is used 1,300°C which is the temperature of the ignition furnace. Further, for example, if the time count is 1 sec and the calculation time is 30 min, there can be obtained 1,800 sets of temperature data, and a graph indicating a sintering temperature history, such as the graph shown in Fig.2, can be generated using the temperature data obtained.

(2) Prediction of sintered ore structure

As described hereunder in sequence, using the sintering temperature history calculated in the segment (1), sintered ore structures are predicted; here, predicted are the calcium ferrite content in a sintered ore and the porosity of the sintered ore.

Prediction of calcium ferrite content in sintered ore

The sintering temperature history of the charged layer is calculated using the formulae (1) and (2) as well as operating data. Since it is assumed that the central portion of the charged layer will reach an average sintering temperature, the sintering temperature history of a height central portion of the charged layer (e.g., a site of 300 mm when the layer thickness is 600 mm) is at first obtained, followed by calculating, as a temperature history index 1, a high-temperature retention time over a range of 1,200 to 1,350°C based on the temperature history obtained. The temperature history index 1 can be calculated by subtracting $\Delta t2$ from $\Delta t1$ in Fig.3.

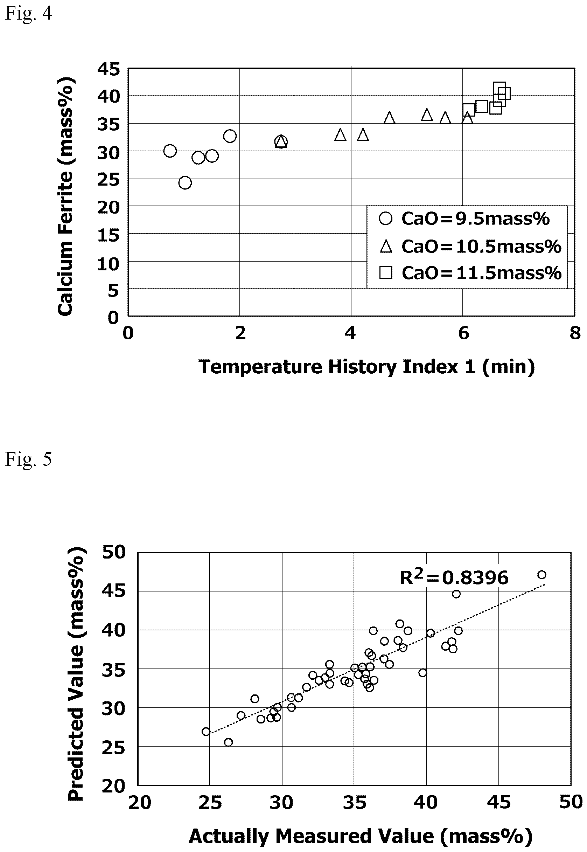

Since calcium ferrite is generated at a temperature of 1,200°C or higher and is melted and decomposed when the temperature is higher than 1,350°C, it can be said that the temperature history index 1 has a correlation to the amount of the calcium ferrite contained in a sintered ore. Thus, by previously conducting an experiment to actually measure, via XRD, the calcium ferrite content in a sintered ore whose temperature history index 1 is known, and then by previously obtaining a correspondence relation between the high-temperature retention time and the calcium ferrite content in the sintered ore, such as the correspondence relation shown in Fig.4, the calcium ferrite content in the sintered ore can be predicted based on such correspondence relation and the temperature history index 1. Here, the calcium ferrite content in a sintered ore is one example of sintered ore structures.

Here, as shown in Fig.4, the correspondence relation between the calcium ferrite content and the temperature history index 1 may vary depending on the amount of CaO contained in the raw material for sintering. Therefore, it is preferred that the correspondence relation between the calcium ferrite content and the temperature history index 1 be obtained with regard to each CaO content. In this way, the calcium ferrite content in a sintered ore can be predicted with a high degree of precision.

Further, as is the case with CaO, the correspondence relation between the calcium ferrite content and the temperature history index 1 may also vary depending on the amount of $Al_2O_3$ contained in the raw material for sintering. Therefore, it is preferred that the correspondence relation between the calcium ferrite content and the temperature history index 1 be obtained with regard to each $Al_2O_3$ content. In this way, the calcium ferrite content in a sintered ore can be predicted with an even higher degree of precision.

Fig. 5 is a graph showing a correlation between a predicted value of the calcium ferrite content and an actually measured value thereof. The predicted value of the calcium ferrite content is a value calculated based on the temperature history index 1, the CaO content, and the graph shown in Fig.4; the actually measured value of the calcium ferrite content is a measured value obtained by measuring the calcium ferrite content in the sintered ore via XRD. As shown in Fig.5, a determination coefficient ($R^2$) of the predicted value and actually measured value is 0.84, which indicates that the calcium ferrite content in the sintered ore can be predicted with a high degree of precision.

As such, if prediction of calcium ferrite content is made possible, the production conditions of a sintered ore can also be adjusted so that the calcium ferrite content in the sintered ore produced matches a previously determined target calcium ferrite content.

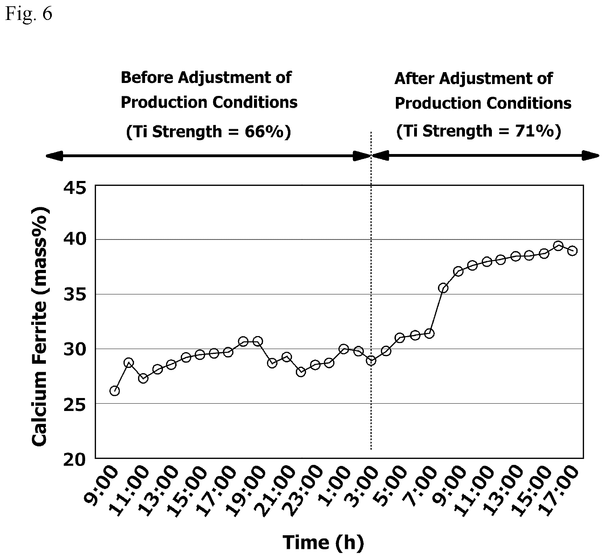

Fig.6 is a graph showing how the calcium ferrite content in the sintered ore produced changes with time. Sintered ore production conditions yielding a calcium ferrite content of 25 to 30% by mass were changed to those yielding a calcium ferrite content of 35 to 40% by mass. Specifically, as a production condition of the raw material for sintering, the amount of the coke breeze added was increased so that the temperature history index 1 would result in a time corresponding to the calcium ferrite content of 35 to 40% by mass. As a result, the calcium ferrite content in the sintered ore produced after the production condition was changed was 35 to 40% by mass, thereby realizing the production of a sintered ore with a high TI strength. Here, TI strength (tumble strength) can be measured by a method described in JIS M 8712:2017.

For sintered ore production condition adjustment, for example, if there are two conditions to be operated, there may be developed a two-dimensional matrix table such as the table shown in the following Table 1, and the production conditions may just be determined so that the temperature history index 1 becomes one corresponding to a target calcium ferrite content. Here, the example shown in Table 1 is one in which developed is a two-dimensional matrix table of the temperature history index 1 with two conditions (airflow rate and coke breeze content); however, other than this example, there may also be developed a three-dimensional matrix table with three conditions.

Table 1

|  |  | Airflow rate (m/s) | | | |
|---|---|---|---|---|---|
|  |  | 0.1 | 0.2 | - | 1 |
| Coke content (mass%) | 3 | a1 | a2 | a3 | a4 |
|  | 4 | b1 | b2 | b3 | b4 |
|  | - | c1 | c2 | c3 | c4 |
|  | 7 | d1 | d2 | d3 | d4 |
| Temperature history index 1: a1 to a4, b1 to b4, c1 to c4, and d1 to d4 | | | | | |

Prediction of porosity in sintered ore

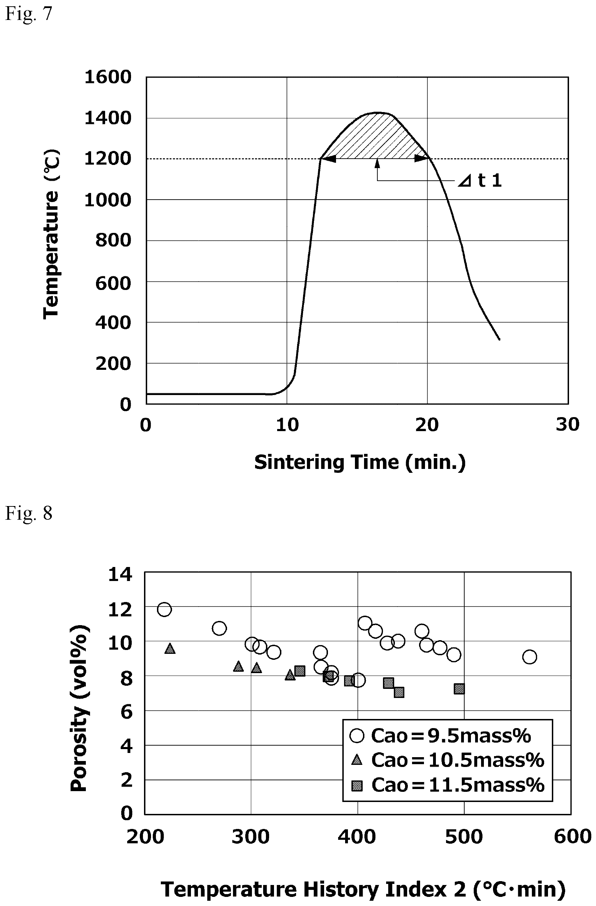

Further, based on this sintering temperature history, there may also be calculated, as a temperature history index 2, an integrated value of a region in the sintering temperature history graph that is not lower than 1,200°C. The integrated value of the region that is not lower than 1,200°C is shown by the shaded area in Fig.7.

Since a melt is generated, and the pores will then be filled as the melt generated flows, it can be said that the temperature history index 2 has a correlation to the porosity of a sintered ore. Thus, by previously measuring the porosity of a sintered ore whose temperature history index 2 is known according to the following steps, and then by obtaining a correspondence relation (Fig. 8) between the temperature history index 2 and the porosity in the sintered ore via experiments, the porosity of the sintered ore can be predicted based on such correspondence relation and the temperature history index 2. Here, the porosity in a sintered ore is another example of sintered ore structures.

The porosity of a sintered ore can be measured by the following steps S11 and S12.

(S1 1) A sintered ore S1 is crushed and is sieved to a particle size of +1 mm-2 mm. As a crushing method, it is preferred that there is used a crushing device with which what has already been crushed to a given particle size or smaller will not be crushed any more, such as a disc mill and a jaw crusher.

(S12) The obtained sintered ore having the particle size of +1 mm-2 mm is then subjected to pore size distribution measurement by mercury porosimetry in accordance with JIS R 1655:2003, whereby the porosity and average pore size can be obtained from a cumulative pore volume with a pore size of 3.6 nm to 200 $\mu$m.

Fig. 8 is a graph showing the correspondence relation between porosity and the temperature history index 2. As shown in Fig.8, the correspondence relation between porosity and the temperature history index 2 may vary depending on the CaO content in the raw material for sintering. Therefore, it is preferred that the correspondence relation between porosity and the temperature history index 2 be obtained with regard to each CaO content. In this way, the porosity of a sintered ore can be predicted with a high degree of precision.

Further, as is the case with calcium ferrite content, using the above correspondence relation, the production conditions of a sintered ore can be adjusted so that the porosity of the sintered ore produced matches a previously determined porosity. As a method for adjusting the production conditions of a sintered ore, the production conditions may be adjusted using a matrix table such as the table shown in Table 1, as is the case with calcium ferrite content.

Sintered ore production method of the present invention

By performing the aforementioned sintered ore structure prediction method, sintered ore structures can be predicted in a short period of time, thereby allowing sintered ore structures such as the mineral structure and pore structure of a sintered ore to be identified and managed online. Further, by setting the production conditions of a sintered ore so that predicted sintered ore structures will match target sintered ore structures, sintered ore structures can be controlled whereby the production of a high-quality sintered ore can be realized.

Industrial Applicability

With the sintered ore structure prediction method of the present invention, sintered ore structures such as the mineral structure and pore structure of a sintered ore can be identified and managed online. In this regard, the sintered ore structure prediction method of the present invention as well as a sintered ore production method using such sintered ore structure prediction method are industrially useful.

Reference Signs List

1 Sintered ore production equipment
2 Drum mixer
3 Sintering machine
4 Crushing machine
5 Cooler
6 Sieving device
11 Raw material feeding device
12 Pallet carriage
13 Ignition furnace
14 Wind box

**Claims**

1. A sintered ore structure prediction method for predicting structures of a sintered ore that is produced by forming a charged layer after charging a raw material for sintering into a continuous-type pallet carriage of a Dwight-Lloyd type sintering machine, and then by sintering the charged layer, comprising:
   predicting the structures of the sintered ore, using a sintering temperature history in the charged layer that is calculated from production conditions of the sintered ore and a heat transfer model.

2. The sintered ore structure prediction method according to claim 1, wherein the production conditions of the sintered ore include component concentrations, particle sizes, and blending amounts of raw materials that are blended into the raw material for sintering; a speed of the pallet carriage; a layer thickness of the charged layer; and a negative pressure.

3. The sintered ore structure prediction method according to claim 2, wherein the production conditions of the sintered ore further include one or more of a gas fuel blowing amount, an oxygen blowing amount, and a circulating exhaust gas amount.

4. The sintered ore structure prediction method according to any one of claims 1 to 3, wherein the structures of the sintered ore are predicted using previously obtained correspondence relations between the sintering temperature history and the structures of the sintered ore.

5. The sintered ore structure prediction method according to any one of claims 1 to 4, wherein the structures of the sintered ore are a calcium ferrite content in the sintered ore and/or a porosity of the sintered ore.

6. A sintered ore production method using the sintered ore structure prediction method according to any one of claims 1 to 5, comprising:

   identifying sintered ore production conditions under which sintered ore structures predicted by the sintered ore structure prediction method match previously determined sintered ore structures; and
   producing a sintered ore under the production conditions identified.

Fig. 1

**Granulation Water**　　1　　2

**Raw Material for Sintering**

12　11　13　3

14

**Sintered Ore**　　6

4

5

**Return Ore**

Fig. 2

Fig. 3

Fig. 4

Fig. 5

Fig. 6

Before Adjustment of
Production Conditions
(Ti Strength = 66%)

After Adjustment of
Production Conditions
(Ti Strength = 71%)

Fig. 7

Fig. 8

## INTERNATIONAL SEARCH REPORT

| | International application No. |
|---|---|
| | **PCT/JP2023/008343** |

**A. CLASSIFICATION OF SUBJECT MATTER**

*C22B 1/20*(2006.01)i
FI: C22B1/20 K; C22B1/20 T

According to International Patent Classification (IPC) or to both national classification and IPC

**B. FIELDS SEARCHED**

Minimum documentation searched (classification system followed by classification symbols)

C22B1/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 111128313 A (CENTRAL SOUTH UNIVERSITY) 08 May 2020 (2020-05-08) paragraphs [0001]-[0284], fig. 3, 8-9 | 1-4, 6 |
| A | | 5 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/008343**

| Patent document cited in search report | | Publication date (day/month/year) | Patent family member(s) | Publication date (day/month/year) |
|---|---|---|---|---|
| CN 111128313 A | | 08 May 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013044491 A

- JP 2015137368 A

**Non-patent literature cited in the description**

- **IWAO MUCHI**. Theoretical Analysis on the Operation of Sintering. *Tetsu-to-Hagane*, 1970, vol. 56 (3), 371-381

- **KO-ICHIRO OHNO**. Effect of Coke Combustion Rate Equation on Numerical Simulation of Temperature Distribution in Iron Ore Sintering Process. *Tetsu-to-Hagane*, 2015, vol. 101 (1), 19-24